**Europäisches Patentamt**

**European Patent Office**

**Office européen des brevets**

(11) Veröffentlichungsnummer: **0 006 237**
**A1**

(12) # EUROPÄISCHE PATENTANMELDUNG

(21) Anmeldenummer: **79101993.8**

(22) Anmeldetag: **18.06.79**

(51) Int. Cl.³: **G 01 G 21/23, G 01 G 23/00**

(30) Priorität: **20.06.78 DE 7818416 U**

(43) Veröffentlichungstag der Anmeldung: **09.01.80**
**Patentblatt 80/1**

(84) Benannte Vertragsstaaten: **CH DE FR GB**

(71) Anmelder: **Sartorius GmbH., Weender Landstrasse 94-108, D-3400 Göttingen (DE)**

(72) Erfinder: **Blawert, Dieter, Karl-Methe-Strasse 12, D-3400 Göttingen (DE)**
Erfinder: **Rademacher, Karl-Heinz, Südring 54, D-3406 Bovenden (DE)**
Erfinder: **Knothe, Erich, Hasenwinkel 4, D-3406 Bovenden 1 (DE)**
Erfinder: **Melcher, Franz-Josef, Rosenwinkel 18, D-3414 Hardegsen 3 (DE)**

(74) Vertreter: **Köhler, Rudolf, c/o Sartorius GmbH Weender Laudstrasse 94-108, D-3400 Göttingen (DE)**

(54) Überlastsicherung für eine oberschalige Präzisionswaage.

(57) Eine Überlastsicherung für eine oberschalige Präzisionswaage, deren Waagschale (2) auf einem wegarmen Lastaufnehmer (1) angeordnet ist, besteht darin, dass zwischen der Waagschale (2) und den sich auf den Lastaufnehmer (1) biegesteif abstützenden Waagschalenträger (3) eine vorgespannte Blattfeder angeordnet ist, deren aus der Vorspannung resultierenden Kräfte grösser sind als die von der Waage getragenen Höchstlast. Der Waagschalenträger (3) ist als Platte ausgebildet und parallel zur Unterseite der Waagschale (2) angeordnet; an deren Unterseite sind im Bereich des Aussenrandes des Waagschalenträgers (3) verteilt angeordnete Übergreifer (14, 15) angeordnet, die den Waagschalenträger (3) am Rand so untergreifen und abstützen, dass die Waagschale (2) begrenzt federnd bei Überschreiten der Höchstlast parallel nach unten ausweichen und bei exzentrischer Belastung begrenzt federnd seitlich abkippen und sich auf Anschlägen abstützen kann.

- 1 -

SARTORIUS GMBH                           Akte SW 7801-EU
Weender Landstraße 94-108                Kö/kl
3400 Göttingen


## Überlastsicherung für eine oberschalige Präzisionswaage

Die Erfindung betrifft eine Überlastsicherung für eine oberschalige Präzisionswaage, deren Waagschale auf einem wegarmen Lastaufnehmer angeordnet ist, wobei zwischen Waagschale bzw. Waagschalenträger und Lastaufnehmer ein elastisches Bauteil angeordnet ist, wobei der Federweg des elastischen Bauteils in Richtung der Bewegung des Lastaufnehmers größer ist als der freie Weg der Waagschale bis zu einem gehäusefesten Anschlag.

Derartige oberschalige Präzisionswaagen arbeiten bei den mechanischen Bauarten mit Hilfe einer Hebelanordnung und schaltbaren Gewichtssätzen oder elektromechanisch, wobei ein Meßwandler nach dem elektromagnetischen Kraftkompensationsprinzip, nach dem Prinzip der schwingenden Saite

0006237

,oder mit Dehnungsmeßstreifen arbeitet. In allen Fällen führt der die Waagschale tragende Lastaufnehmer eine Vertikalbewegung von wenigen Zehntel- oder wenigen Millimetern aus, ehe er auf einen gehäusefesten Anschlag aufsetzt, der die Waagenmechanik gegen Überanspruchung schützen soll. Derartige Belastungen treten auf, wenn durch fehlerhaftes Bedienen Lasten zu hart auf die Waagschale aufgesetzt werden, zu sehr im Peripheriebereich oder sonstwie unsachgemäß positioniert werden.

Bei einer bekannten Überlastsicherung der eingangs genannten Bauart gelangt eine sternförmig ausgebildete Feder zur Anwendung, die zwischen Waagschale und Lastaufnehmer angeordnet ist. Dieses federnde Bauelement aus sternförmig um den Tragzapfen der Waagschale angeordneten Blattfederarmen zeigt nicht die gewünschten Ergebnisse für das Eliminieren von mittig auf der Waagschale aufgesetzten Überlasten. Bei exzentrisch aufgebrachter Last muß jeder Sternfinger die volle mögliche Belastung aufnehmen können, damit erhöht sich die mittig aufgesetzte Last annähernd entsprechend der Anzahl der Sternfinger.

Der Erfindung liegt daher die Aufgabe zugrunde, eine Überlastsicherung nach dem Oberbegriff mit einfachen Mitteln so weiterzubilden, daß sowohl zentral als auch an der Peripherie der Waagschale wirkende Überlasten und Stöße einwandfrei aufgefangen und nicht in das System eingeleitet werden und daß der maximale Lastunterschied zwischen exzentrisch und zentrisch aufgebrachter Last ungefähr 1:2 entspricht.
Diese Aufgabe wird erfindungsgemäß dadurch gelöst, daß der Waagschalenträger eine im wesentlichen parallel zu seiner Unterseite im Abstand verlaufende Tragplatte für den sich auf den Lastaufnehmer biegesteif abstützenden Lastschalentragzapfen aufweist und daß im Freiraum zwischen Waagschalenträgerunterseite und Tragplattenoberseite ein Federelement eingeschlossen ist, mit welchem der Waagschalenträger gegenüber der Tragplatte durch an deren Außenrand angreifende Übergreifer des Waagschalenträgers begrenzt federnd abgestützt ist.

Vorteilhafte Weiterbildungen sind in den übrigen Ansprüchen unter Schutz gestellt.

Der Erfindungsgedanke, der die verschiedensten Ausführungsmöglichkeiten zuläßt, ist in einem Ausführungsbeispiel anhand der beiliegenden Zeichnung näher erläutert. Dabei zeigt:

Figur 1 einen Vertikalschnitt nach der Linie 1-1 in Figur 3;

Figur 2 einen Vertikalschnitt nach der Linie 2-2 in Figur 3, jedoch mit abgewandeltem Waagengehäuse;

Figur 3 eine Untersicht auf den Waagschalenträger in verkleinerter Darstellung und

Figur 4 eine perspektivische Darstellung des Federelementes.

Die Überlastsicherung findet im vorliegenden Beispiel Anwendung bei einer oberschaligen Präzisionswaage mit elektromagnetischer Lastkompensation. Der Lastaufnehmer 1 ist mit Hilfe einer Parallelführung 5 an Festpunkten des Gehäuses 4 vertikal geführt und zwar in einem Bereich, der durch die Anschläge 9 bestimmt ist.

SW 7801-EU          - 4 -

Der Vertikalweg des Lastaufnehmers 1 beträgt somit nur wenige Zehntel-Millimeter. Die elektromagnetische Lastkompensation erfolgt in üblicher Weise mit Hilfe eines am Lastaufnehmer 1 angeordneten Spulenhalters 8 mit Spule 7, welche in den Luftspalt eines Permanentmagneten 6 eintaucht, der feststehend angeordnet ist.

Der Lastaufnehmer 1 tritt berührungsfrei durch eine Öffnung in der Decke des Gehäuses 4 hindurch, welches mit Hilfe ringförmiger Ansätze, Kragen 17 oder dergleichen in Verbindung mit der Waagschale 2 eine Art Labyrinth-Dichtung bildet. Das Ende des Lastaufnehmers 1 dient zur biegesteifen Aufnahme des Waagschalentragzapfens 10.

Die Waagschale 2 in Form eines Tellers liegt lose auf dem Waagschalenträger 3, der seinerseits auf einer parallel und im Abstand dazu angeordneten Tragplatte 11 aufliegt, wobei im Freiraum zwischen der Unterseite des Waagschalenträgers 3 und der Oberseite der Tragplatte 11 ein Federelement 12 in Form einer vorgespannten Blattfeder eingeschaltet ist. Die Blattfeder 12 ist durch die Zentrierung 13 auf dem Ende des Tragzapfens 10 bzw. der Tragplatte 11 unverschieblich angeordnet.

Im Bereich des Außenrandes des Waagschalenträgers 3 sind, über dessen Umfang verteilt, mehrere Übergreifer in Form von Zapfen 14 und Zapfenteller 15 angeordnet, wobei die Zapfenteller 15 oder Federringe den Außenrand der Tragplatte 11 untergreifen und somit eine unter der Vorspannung der Blattfeder 12 stehende Verbindung zwischen Waagschalenträger 3 und Tragplatte 11 herstellen.

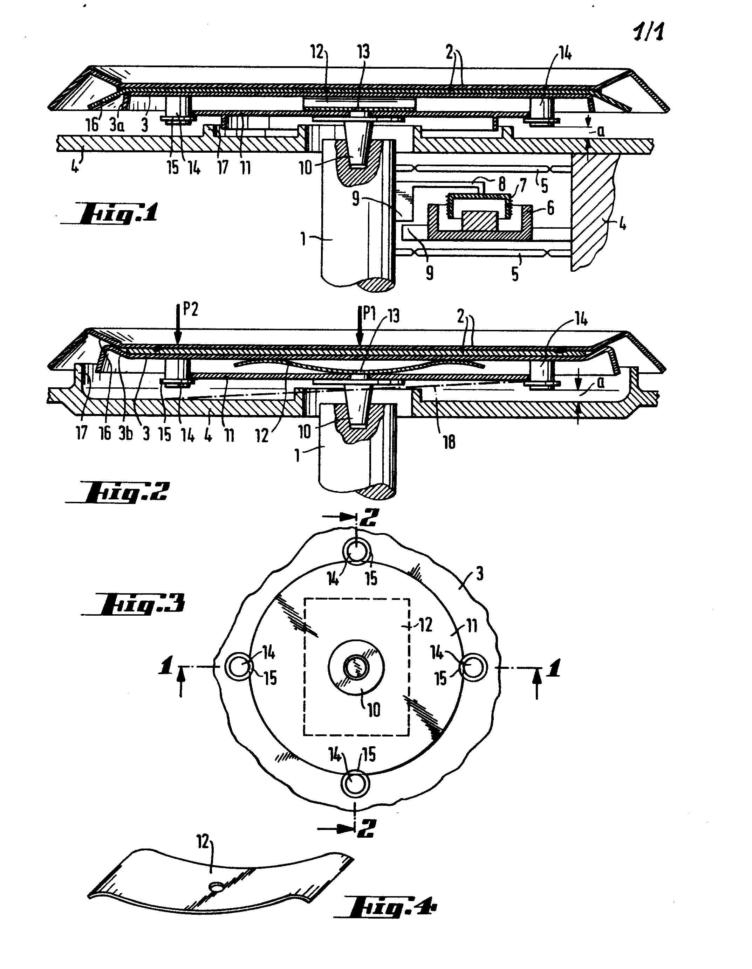

Wie aus Fig. 2 und Fig. 4 ersichtlich ist, sind die freien Enden der Blattfeder 12 abgebogen und als Gleitflächen ausgebildet, die ein Ausweichen der Federenden auf der Unterseite des Waagschalenträgers 3 bei Belastung zulassen.

Wie aus Fig. 1 ersichtlich ist, ist der maximale Federweg als a gekennzeichnet und wird gebildet durch den Abstand der Zapfen 14 von der Oberseite des Gehäuses 4.

Wird beispielsweise sachgemäß eine Last P1, die höher als der Wägebereich ist, auf die Waagschale 2 aufgesetzt, so setzt sich der Lastaufnehmer 1 auf den Anschlag 9 und die Blattfeder 12 wird unter dieser Last anschließend zusammengedrückt, so daß sich die Zapfen 14 auf dem Gehäuse 4 abstützen, bevor die für das Wägesystem schädliche Überlast in die Mechanik des Lastaufnehmers 1 eingehen kann.

Die gleiche Wirkung tritt ein, wenn eine zulässige Last aufgrund unsachgemäßer Handhabung zu hart auf die Waagschale 2 aufgesetzt wird und dadurch Stoßbelastungen entstehen, die größer sind als die höchstzulässige Last. Bei zentrischer Belastung wirken Waagschale 2, Tragplatte 11 und Blattfeder 12 nach Art einer Parallelführung, so daß sich alle Zapfen 14 auf dem Gehäuse 4 abstützen. Wird eine Last P2 unsachgemäß exzentrisch auf die Waagschale 2 aufgesetzt, so verlagert sich der Drehpunkt des Waagschalenträgers 3 beim Verkanten, wie in Fig. 2 durch die Linie 18 angedeutet, an den diametral gegenüberliegenden Randbereich der Tragplatte 11, so daß aufgrund der Hebelübersetzung bereits eine geringere Last als die höchstzulässige Last ausreicht, um die Überlastsicherung zur Wirkung zu bringen. In diesem Fall setzt einseitig der unter der Last P2 liegende Zapfen 14 auf das Gehäuse 4 auf, ohne daß schädliche Belastungen über den Tragzapfen 10 in das System eingeleitet werden.

In einer nicht dargestellten Ausführungsform setzt anstelle der Zapfen 14 der tiefer heruntergezogene Außenrand das Waagschalenträgers 3 bei Überlast direkt auf dem Gehäuse 4 auf.

Zur Aufnahme seitlicher Stoßbelastungen gegen die Waagschale 2 weist der Waagschalenträger 3 einen nach unten abgerundeten Rand 3a auf, der von Schrägflächen 16 der Waagschale 2 übergriffen wird, so daß diese bei seitlicher Stoßeinwirkung in Stoßrichtung ausweichen kann, ohne daß diese Stöße in den Waagschalenträger 3 und damit in das System eingehen.

Die Sicherung gegen seitlichen Stoß ist bei der Ausführungsform gemäß Fig. 2 noch dadurch verbessert, daß das Gehäuse 4 nach unten verspringt und den Waagschalenträger 3 umschließt, so daß nur der Außenrand der Waagschale 2 den Oberrand 17 des Gehäuses 4 übergreift. Seitliche Stoßbelastungen auf die Waagschale 2 führen dazu, daß diese aufgrund der umlaufenden Schrägfläche 16 vom Schalenträger 3 mit Schrägankröpfung 3b abgleitet, ohne die schädlichen Stöße in das System einzuleiten.

Der Weg des Lastaufnehmers bei solchen elektromagnetisch kompensierenden Waagen beträgt nur wenige Zehntel-Millimeter, während er bei mechanischen Waagen im Bereich von 4-10 mm liegen kann. In beiden Fällen ist das Prinzip der beschriebenen Überlastsicherung wirksam.

0006237

Durch entsprechende Wahl der Feder 12 kann die Überlastsicherung auf die waagenspezifischen Überlasten der einzelnen Waagentypen eingestellt werden.

Patentansprüche

1. Überlastsicherung für eine oberschalige Präzisionswaage, deren Waagschale auf einem wegarmen Lastaufnehmer angeordnet ist, wobei zwischen Waagschale bzw.
   Waagschalenträger und Lastaufnehmer ein elastisches
   Bauteil angeordnet ist, dessen Federweg in Richtung
   der Bewegung des Lastaufnehmers größer ist als der
   freie Weg der Waagschale bis zu einem gehäusefesten
   Anschlag, dadurch gekennzeichnet, daß der Waagschalenträger (3) eine im wesentlichen parallel zu seiner Unterseite im Abstand verlaufende Tragplatte (11) für
   den sich auf dem Lastaufnehmer (1) abstützenden Lastschalentragzapfen (10) aufweist, und daß im Freiraum
   zwischen Waagschalenträgerunterseite und Tragplattenoberseite ein Federelement (12) eingeschlossen ist, mit
   welchem der Waagschalenträger (3) gegenüber der Tragplatte (11) durch an deren Außenrand angreifende Übergreifer (14,15) des Waagschalenträgers (3) begrenzt
   federnd abgestützt ist.

2. Überlastsicherung nach Anspruch 1, dadurch gekennzeichnet, daß die Übergreifer (14,15) durch von der Unterseite des Waagschalenträgers (3) vorstehende Zapfen gebildet sind.

3. Überlastsicherung nach Anspruch 1 und 2, dadurch gekennzeichnet, daß mehrere Übergreifer (14,15) regelmäßig verteilt an der Peripherie der Tragplatte (11)
   angeordnet sind.

4. Überlastsicherung nach Anspruch 1 bis 3, dadurch gekennzeichnet, daß das Federelement (12) durch mindestens eine Blattfeder gebildet ist.

5. Überlastsicherung nach Anspruch 1 bis 4, dadurch gekennzeichnet, daß die Blattfeder (12) als gewölbte, vorgespannte Feder ausgebildet ist.

6. Überlastsicherung nach Anspruch 1 bis 5, dadurch gekennzeichnet, daß die Blattfeder (12) zentrisch zum Tragzapfen (10) auf der Waagschalenunterseite oder auf der Tragplattenoberseite fixiert ist.

7. Überlastsicherung nach Anspruch 1 bis 6, dadurch gekennzeichnet, daß die als Übergreifer (14,15) ausgebildeten Zapfen am freien Ende verbreitert sind, wobei deren verbreiterter Teil den Rand der Tragplatte untergreift.

8. Überlastsicherung nach Anspruch 1 bis 7, dadurch gekennzeichnet, daß die Übergreifer (14,15) sich auf gehäusefesten Anschlägen im gekippten Zustand des Waagschalenträgers (3) abstützen.

9. Überlastsicherung nach Anspruch 1 bis 8, dadurch gekennzeichnet, daß der Außenrand des Waagschalenträgers (3) sich auf gehäusefesten Anschlägen abstützt.

10. Überlastsicherung nach Anspruch 1 bis 9, dadurch gekennzeichnet, daß der Waagschalenträger (3) und die Tragplatte (11) kreisrund ausgebildet sind.

0006237

1/1

Fig.1

Fig.2

Fig.3

Fig.4

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - A - 2 342 023 (SIEMENS AG)<br>* Seite 5; Figur 1 *<br>-- | 1-7,9 | G 01 G 21/23<br>23/00 |
| X | GB - A - 1 126 485 (W & T AVERY LTD)<br>* Seite 1, Zeile 70 bis Seite 2, Zeile 48; Figur 1 *<br>-- | 1-7,9 | |
| | FR - A - 1 292 884 (L.E.L. HAUTE-VILLE)<br>* Figuren 3,4 *<br>-- | 1,4,5 | RECHERCHIERTE SACHGEBIETE (Int. Cl.³) |
| | FR - A - 719 840 (NV MAATSCHAPPIJ TOT VERVAARDIGING VAN SNIJMACHINES VOLGENS VAN BERKEL'S PATENT EN VAN ANDERE WERKTUIGEN)<br>* Figur *<br>-- | 1 | G 01 G 21/00<br>21/10<br>21/22<br>21/23<br>21/24<br>23/00<br>23/06 |
| | US - A - 4 058 179 (R.J. PRICE)<br>* Spalte 4, Zeilen 19-45; Figuren 2-6 *<br>-- | 1 | |
| | DE - A - 1 813 639 (ALLMÄNNA SVENSKA ELEKTRISKA AB)<br>* Anspruch; Figur *<br>-- | 1 | **KATEGORIE DER GENANNTEN DOKUMENTE**<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| | CH - A - 592 868 (METTLER INSTRUMENTE AG)<br>./. | 1,4-6<br>9,10 | E: kollidierende Anmeldung<br>D: in der Anmeldung angeführtes Dokument<br>L: aus andern Gründen angeführtes Dokument<br>&: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 24-09-1979 | VAN ASSCHE |

EPA form 1503.1 06.78

| | | |
|---|---|---|
| **Europäisches** **Patentamt** | **EUROPÄISCHER RECHERCHENBERICHT** | Nummer der Anmeldung EP 79 10 1993 -2- |

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | * Spalte 1, Zeile 54 bis Spalte 2, Zeile 43; Figuren 1,2 * -- CH - A - 576 634 (METTLER INSTRUMENTE AG) * Spalte 2, Zeilen 9-64; Figuren 1,2 * -- | 1,4-6, 9,10 | |
| A | CH - A - 557 024 (PRECISA AG RECHENMASCHINENFABRIK) * Ansprüche; Figuren 1-5 * ---- | 1 | RECHERCHIERTE SACHGEBIETE (Int. Cl.²) |

EPA Form 1503.2  06.78